# EUROPÄISCHE PATENTSCHRIFT

(11) **EP 3 034 981 B1**
(45) Veröffentlichungstag und Bekanntmachung des Hinweises auf die Patenterteilung: **06.11.2019**
(21) Anmeldenummer: 15199734.3
(22) Anmeldetag: 14.12.2015
(51) Int. Cl.: F41G 1/38, G01C 15/00, G02B 23/16

(54) **BETÄTIGUNGSELEMENT ZUM EINSTELLEN DER ZIELMARKE EINES ZIELFERNROHRS**
ACTUATOR ELEMENT FOR ADJUSTING THE SIGHTING MARK OF A TARGET TELESCOPE
ÉLÉMENT D'ACTIONNEMENT DESTINÉ À RÉGLER LE RÉTICULE D'UNE LUNETTE DE VISÉE

(30) Priorität: 15.12.2014 AT 509072014
(43) Veröffentlichungstag der Anmeldung: 22.06.2016
(73) Patentinhaber: Swarovski-Optik KG., 6067 Absam (AT)
(72) Erfinder: ÖTTL, Peter, 6068 Mils (AT); WIEDERMANN, Helmut, 6136 Pill (AT)
(74) Vertreter: Burger, Hannes

(56) Entgegenhaltungen:
- EP-A2- 1 959 221
- US-A1- 2011 100 152
- US-B1- 6 691 447

## Beschreibung

Die Erfindung betrifft ein Betätigungselement zum Einstellen der Lage einer Zielmarke eines Zielfernrohrs entsprechend dem Oberbegriff des Anspruches 1.

Beim Einschießen einer Waffe gemeinsam mit einer Zieleinrichtung bzw. einem Zielfernrohr werden üblicherweise zunächst auftretende Abweichungen des tatsächlichen Auftreffpunktes eines Geschoßes von dem gewünschten Auftreffpunkt bzw. der Lage der Zielmarke dadurch beseitigt, dass die Ausrichtung des die Zielmarke tragenden Innenrohrs mit Hilfe gattungsgemäßer Betätigungselemente verändert wird. Ein solches Einschießen erfolgt bekanntlich bei einer festen Schussentfernung (beispielsweise 100 m) mit einer horizontal ausgerichteten Visierlinie auf ein Ziel und unter Verwendung einer für die Waffe typischen Munition. Gattungsgemäße, auch als Stelltürme bezeichnete, Betätigungselemente erlauben darüber hinaus auch noch die Berücksichtigung von in der praktischen Anwendung auftretenden Abweichungen zu den ursprünglichen Einschießbedingungen. Zu diesen Einflussfaktoren, die berücksichtigt werden müssen, zählen vor allem eine von der ursprünglichen Einschussentfernung abweichende Zieldistanz als auch ballistische Kennwerte der verwendeten Munition bzw. des verwendeten Geschoßes. Beim Stand der Technik ist es daher auch bekannt, gattungsgemäße Betätigungselemente mit einem oder auch mehreren, aufschiebbaren Indexelementen zu versehen. Mit Hilfe von an den Indexelementen angebrachten Markierungen können so schnell Einstellungen der Stelltürme vorgenommen werden, durch die abweichende Schussentfernungen und/oder verwendete Munitionstypen berücksichtigt werden können. Im Stand der Technik sind auch als sogenannte Seitentürme verwendete Betätigungselemente bekannt, mit denen Seitenwind berücksichtigt werden kann. Nachteilig bei aus dem Stand der Technik bekannten Betätigungselementen ist, dass Änderungen der Einstellung der Indexelemente oft umständlich und aufwändig nur unter Verwendung von Werkzeugen möglich sind. Auch erweist sich die Vornahme solcher Änderungen der Einstellungen als sehr fehleranfällig.

Es ist die Aufgabe der Erfindung ein Betätigungselement zu schaffen, mit dem die Einstellung der Lage einer Zielmarke eines Zielfernrohrs einfacher und mit höherer Flexibilität vorgenommen werden kann.

Die Aufgabe der Erfindung wird gelöst durch ein Betätigungselement zum Einstellen der Lage einer Zielmarke eines Zielfernrohrs mit einem Kopfmodul und mit einem Rumpfmodul, und mit einer in dem Rumpfmodul um eine Rotationsachse drehbar gelagerten Spindel, wobei das Rumpfmodul ein Rastgehäuse und eine in dem Rastgehäuse drehbar gelagerte Rastnabe umfasst, und wobei die Spindel in dem Rastgehäuse gelagert ist, und wobei zur Übertragung einer Drehbewegung von dem Kopfmodul auf die Spindel das Kopfmodul mit der Spindel drehgekoppelt ist, und wobei das Kopfmodul und das Rumpfmodul gegenüber einer Verstellung in Richtung der Rotationsachse durch einen Koppelmechanismus in ihrer relativen Lage zueinander fixiert sind und wobei der Koppelmechanismus ein Bedienelement zur Trennung des Kopfmoduls von dem Rumpfmodul umfasst, wobei das Bedienelement manuell betätigbar ist, und das Bedienelement aus einer Gruppe, umfassend einen Druckknopf, einen Drehknopf, einen Drehgriff, einen in axialer Richtung linear verschiebbaren Bedienring und eine Schiebehülse, ausgewählt ist. Dies hat den Vorteil, dass das Kopfmodul sehr leicht von einem Benutzer von dem auf dem Zielfernrohr verbleibenden Rumpfmodul getrennt werden kann, ohne dass dazu zusätzliche Werkzeuge benötigt werden. Ein besonderer Vorteil des Betätigungselements liegt aber auch darin, dass Kopfmodule die mit spezifischen bzw. unterschiedlichen Funktionalitäten ausgebildet sind, mit dem gleichen Rumpfmodul nahezu beliebig kombiniert werden können. Ein Betätigungselement zum Einstellen der Lage einer Zielmarke eines Zielfernrohrs mit einem Rumpfmodul und einem Kopfmodul das vom Rumpfmodul trennbar und mit dem Rumpfmodul verbindbar ist, ist in EP 1 959 221 A2 dargestellt.

Gemäß einer vorteilhaften Weiterbildung des Betätigungselementes ist vorgesehen, dass zur Kennzeichnung einer vorbestimmbaren Lage der Zielmarke das Kopfmodul eine Skala und das Rumpfmodul einen Nullindex umfasst. Das Kopfmodul umfasst vorzugsweise eine Trägerhülse, wobei die Skala an dieser Trägerhülse angebracht ist. Gemäß einer weiteren vorteilhaften Weiterbildung ist vorgesehen, dass zumindest ein Indexelement zur Kennzeichnung einer vorbestimmbaren Lage der Zielmarke an der Drehhülse drehfest fixiert ist. Dabei ist auch vorgesehen, dass die Trägerhülse mit der Rastnabe drehgekoppelt ist.

Vorteilhaft ist auch die Weiterbildung wonach der Koppelmechanismus einen Bestandteil eines Schließmechanismus bildet, wobei der Schließmechanismus ein Spannwerk mit vorgespannten Federn umfasst. Der Schließmechanismus weist außerdem ein Bedienelement auf, das mit dem Spannwerk in Wirkverbindung steht, wobei durch Betätigung des Bedienelements die Verbindung zwischen dem Kopfmodul und dem Rumpfmodul gelöst werden kann.

Vorzugsweise ist das Bedienelement des Schließmechanismus durch einen Druckknopf gebildet.

Wenn im Zusammenhang mit dem Trennen bzw. Zusammenfügen von Kopfmodul und Rumpfmodul des erfindungsgemäßen Betätigungselementes davon die Rede ist, dass dies durch eine manuelle Betätigung erfolgen kann, so wird darunter ausdrücklich verstanden, dass dies ohne Zuhilfenahme besonderer gesonderter Werkzeuge erfolgen kann. Das heißt zum Lösen oder Wiederherstellen der Verbindung zwischen Kopfmodul und Rumpfmodul sind die bloßen Hände eines Benutzers ausreichend.

Gemäß einer bevorzugten Ausführungsform ist ein Betätigungselement zum Einstellen der Lage einer Zielmarke eines Zielfernrohrs vorgesehen, das mit einem Rastgehäuse, einer in dem Rastgehäuse um eine Rotationsachse drehbar gelagerten Spindel, einer um die Rotationsachse drehbaren Rastnabe zum Bewegen der Spindel und einer Trägerhülse ausgebildet ist. Dabei ist die Trägerhülse mit der Rastnabe drehgekoppelt und ist an der Trägerhülse zumindest ein Indexelement zur Kennzeichnung einer vorbestimmbaren Lage der Zielmarke drehfest fixiert. Die Trägerhülse und das zumindest eine Indexelement bilden Bestandteile eines Kopfmoduls. Das Rastgehäuse, die Spindel und die Rastnabe bilden Bestandteile eines Rumpfmoduls. Das Kopfmodul und das Rumpfmodul des Betätigungselements sind durch einen Schließmechanismus miteinander verbunden, wobei der Schließmechanismus ein Spannwerk mit vorgespannten Federn umfasst. Dies hat den Vorteil, dass unterschiedlich eingestellte aber in gleicher Weise modulartig aufgebaute Kopfmodule bei dem so ausgebildeten Betätigungselement einfach ausgetauscht werden können. Damit wird auch eine größere Anzahl voreingestellter Lagen der Zielmarke verfügbar. Vorteilhaft ist diese Ausbildung des Betätigungselements aber auch im Falle von Beschädigungen des Kopfmoduls, wo dieses leicht gegen ein Reservekopfmodul ausgetauscht werden kann, andererseits aber auch das Rumpfmodul für sich alleine weiter verwendbar ist.

Vorteilhafterweise umfasst der Schließmechanismus einen Druckknopf, der mit dem Spannwerk in Wirkverbindung steht, wobei durch Betätigung des Druckknopfs die Verbindung zwischen dem Kopfmodul und dem Rumpfmodul gelöst werden kann. Es genügt also eine einfache manuelle Betätigung des Schließmechanismus am Druckknopf, ohne dass dazu ein besonderes, zusätzliches Werkzeug erforderlich wäre.

Durch die Ausbildung des Betätigungselementes, wonach das Spannwerk des Schließmechanismus zumindest zwei stabile Lagen aufweist, können einerseits ein offener und andererseits ein geschlossener Zustand des Spannwerks jeweils aufrecht erhalten werden, wodurch das Abnehmen des Kopfmoduls als auch das Aufsetzen des Kopfmoduls auf das Rumpfmodul erleichtert werden.

Gemäß einer Weiterbildung des Betätigungselements umfasst das Spannwerk des Schließmechanismus bezüglich der Rotationsachse koaxial angeordnete und ineinander verschiebbare Hülsen. Dies hat den Vorteil einer kompakten inneren Strukturierung, da auch bei dünnwandiger Ausbildung der Hülsen noch eine relativ hohe mechanische Stabilität erreicht werden kann.

Weiters ist vorgesehen, dass der Schließmechanismus eine Rahmenhülse und eine in der Rahmenhülse verschiebbare Sperrhülse umfasst, wobei in einem unteren Endbereich der Sperrhülse zumindest ein radial verlaufender Tunnel ausgebildet ist und in dem Tunnel zumindest eine Sperrkugel angeordnet ist, wobei die zumindest eine Sperrkugel in radialer Richtung hin und her bewegbar ist. Je nach der Lage der Sperrkugel an dem einen oder an dem anderen Ende des Tunnels kann die Sperrkugel in doppelter Weise die Funktion eines Sperrers bzw. Riegels gegenüber Relativverstellungen der Sperrhülse in axialer Richtung erfüllen.

Eine vorteilhafte Ausbildung des Betätigungselements ist auch, dass die Sperrhülse zumindest ein axial verlaufendes Langloch und die Rahmenhülse zumindest einen mit dem Langloch in Eingriff stehenden Stift aufweist. Dadurch ist ein eindeutig begrenzter Verstellweg der Sperrhülse definiert. Bei dem Betätigungselement ist außerdem vorgesehen, dass die Rastnabe einen oberen Rohrabschnitt umfasst, der an einer Innenseite eine umlaufende Nut aufweist, und weiters dass in einem verbundenen Zustand von Kopfmodul und Rumpfmodul der untere Endbereich der Sperrhülse in dem oberen Rohrabschnitt der Rastnabe aufgenommen ist, wobei die zumindest eine Sperrkugel in der Nut der Rastnabe eingerastet ist. Dies hat den Vorteil, dass in jeder Winkelstellung von Kopfmodul relativ zu Rumpfmodul eine formschlüssige Verbindung hergestellt werden kann.

Der Schließmechanismus des Betätigungselements umfasst außerdem eine äußere Spannhülse und eine erste, äußere Druckfeder, die zwischen der Rahmenhülse und der äußeren Spannhülse angeordnet und eingespannt gehalten ist. Dies hat den Vorteil, dass beim Lösen der Verbindung durch Betätigen des Druckknopfs das gesamte Kopfmodul selbsttätig unter der Wirkung dieser Druckfeder abgehoben wird.

Vorteilhaft ist auch, dass der Schließmechanismus eine innere Spannhülse und eine zweite, innere Druckfeder, die zwischen der Sperrhülse und der inneren Spannhülse angeordnet und eingespannt gehalten ist, umfasst. Und weiters, dass in dem verbundenen Zustand von Kopfmodul und Rumpfmodul ein unterer Endbereich der inneren Spannhülse an der zumindest einen Sperrkugel anliegt und diese in der umlaufenden Nut der Rastnabe eingerastet hält. Dadurch wird von selbst ein geschlossener Zustand aufrecht erhalten.

Vorteilhaft sind auch Weiterbildungen des Betätigungselements wonach die innere Spannhülse an einer Außenseite eine umlaufende Nut aufweist, wobei in einer Zwischenstellung beim Trennen von Kopfmodul und Rumpfmodul die zumindest eine Sperrkugel zumindest teilweise in der umlaufenden Nut der inneren Spannhülse aufgenommen ist und dass in einem getrennten Zustand von Kopfmodul und Rumpfmodul die zumindest eine Sperrkugel durch eine im äußeren Endbereich des Tunnels ausgebildete Verengung in ihrer radialen Lage in dem Tunnel gehalten ist. Damit kann die Sperrkugel in einer definierten Lage gehalten werden.

Bei dem Betätigungselement ist außerdem vorgesehen, dass die Rahmenhülse an einem oberen Endbereich einen nach außen abstehenden, oberen Scheibenabschnitt aufweist, der mit der Trägerhülse verbunden ist, wobei der Scheibenabschnitt mit einem Gewinde in die Trägerhülse eingeschraubt ist. In dem oberen Endbereich der Rahmenhülse ist außerdem ein Schraubring befestigt, durch den die innere Spannhülse mit der zweiten, inneren Druckfeder eingespannt gehalten ist. Der Sperrmechanismus des Betätigungselements kann daher einfach zusammengebaut bzw. wieder zerlegt werden.

Vorteilhaft ist auch die Weiterbildung des Betätigungselements, wonach der Druckknopf unter Zwischenschaltung einer Druckfeder mit der inneren Spannhülse verbunden ist. Der Druckknopf wird damit in einer definierten Lage gehalten und die Einwirkung auf das Spannwerk des Schließmechanismus um den zunächst zu überwindenden Federweg verzögert. Ein irrtümlich bzw. unbeabsichtigt erfolgendes Trennen des Kopfmoduls von dem Rumpfmodul kann dadurch weitestgehend verhindert werden.

Vorteilhaft ist auch die Weiterbildung des Betätigungselements wonach der Druckknopf einen Achsbolzen umfasst, der mit Rastnasen an einem nach innen stehenden Vorsprung der inneren Sperrhülse eingerastet ist. Die Verbindung zwischen dem Druckkknopf und der inneren Sperrhülse ist damit einfach herstellbar aber auch wieder lösbar.

Weiters ist vorgesehen, dass der Druckknopf durch die zwischen der inneren Spannhülse und dem Druckknopf angeordnete Druckfeder in einer maximal angehobenen Lage festgehalten ist.

Weitere Einzelheiten der vorliegenden Erfindung werden anhand eines bevorzugten Ausführungsbeispiels in der nun folgenden Figurenbeschreibung dargestellt.

Zum besseren Verständnis der Erfindung wird diese anhand der nachfolgenden Figuren näher erläutert.

Es zeigen jeweils in stark vereinfachter, schematischer Darstellung:
- Fig. 1: ein Betätigungselement angeordnet an dem Hauptrohr eines Zielfernrohrs perspektivisch dargestellt;
- Fig. 2: einen Längsschnitt des Betätigungselements;
- Fig. 3: einen Längsschnitt des Kopfmoduls des Betätigungselements;
- Fig. 4: einen Längsschnitt des Rumpfmoduls des Betätigungselements;
- Fig. 5: ein Detail des an dem Rumpfmodul angeordneten Schließmechanismus geschnitten dargestellt.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

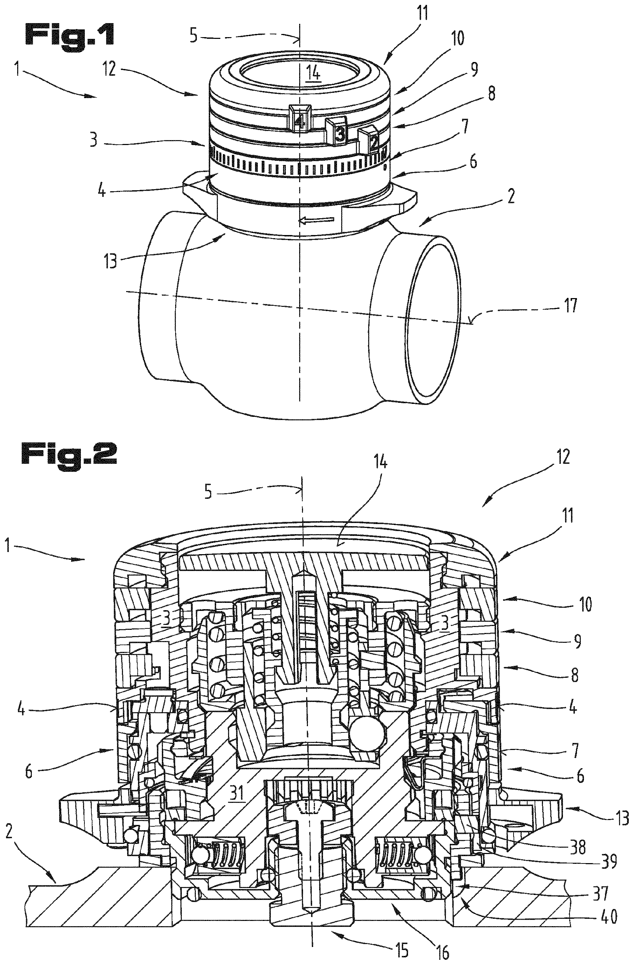

Die Fig. 1 zeigt ein Betätigungselement 1 zum Einstellen der Lage einer Zielmarke eines Zielfernrohrs in einer an einem Tubus 2 des Zielfernrohrs montierten Stellung perspektivisch dargestellt. Der obere Teil des Betätigungselementes 1 umfasst zunächst eine Trägerhülse 3 mit einer daran angebrachten Skala 4 zur Anzeige des Ausmaßes einer Verdrehung um eine Rotationsachse 5. Der die Skala 4 tragende ringförmige Bereich der Trägerhülse 3 fungiert gleichzeitig als ein erstes Indexelement zur Anzeige der eingestellten Lage der Zielmarke des Zielfernrohrs. Dazu ist andererseits an einem unterhalb der Trägerhülse 3 drehfest angeordneten Indexring 6 ein Nullindex 7 angebracht. Nach oben hin schließen sich an das erste Indexelement der Trägerhülse 3 ein zweites Indexelement 8, ein drittes Indexelement 9 und ein viertes Indexelement 10 an. Diese Indexelemente 8, 9, 10 sind auf die Trägerhülse 3 aufgesteckt und mit dieser drehfest verbunden. An einem oberen Endbereich der Trägerhülse 3 ist schließlich oberhalb des vierten Indexelementes 10 ein Kappenring 11 auf die Trägerhülse 3 aufgeschraubt. Die derart mit der Trägerhülse 3 verbundenen Indexelemente 8, 9, 10 bilden gemeinsam mit der Trägerhülse 3 und dem aufgeschraubten Kappenring 11 einen Stellknopf 12 des Betätigungselements 1.

Zur verdrehgesicherten Fixierung der jeweiligen Winkelstellung der Indexelemente 8, 9, 10 an der Trägerhülse 3 kann vorgesehen werden, dass der Kappenring 11 beim Aufschrauben auf die Trägerhülse 3 mit den Indexelementen 8, 9, 10 derart in Eingriff kommt, dass diese schließlich durch Erzeugung eines Reibschlusses gegeneinander gedrückt und derart fixiert werden. In dem hier beschriebenen, bevorzugten Ausführungsbeispiel ist jedoch vorgesehen, dass zwischen den Indexelementen 8, 9, 10 und einer Zylindermantelfläche der Trägerhülse parallel zur Richtung der Rotationsachse 5 verlaufende ineinandergreifende Verzahnungen vorgesehen sind, die ein unbeabsichtigtes Verdrehen der Indexelemente 8, 9, 10 im auf die Trägerhülse 3 aufgeschobenen Zustand durch eine formschlüssige Fixierung verhindern. Eine solche technische Lösung ist in dem Dokument EP 1 959 221 A2 der gleichen Anmelderin im Detail ausführlich beschrieben.

Das Betätigungselement 1 umfasst weiters auch noch in seinem, dem Tubus 2 des Zielfernrohrs zugewandten Endbereich einen Arretierring 13. Dieser Arretierring ist um die Rotationsachse 5 drehbar bzw. verschwenkbar ausgebildet. Der Arretierring 13 erlaubt es, den Stellknopf 12 in seiner Winkelstellung zu fixieren und so ein unbeabsichtigtes Verdrehen des Stellknopfes 12 zu verhindern.

In der Darstellung gemäß Fig. 1 ist schließlich auch noch in dem Kappenring 11 ein durch einen Benutzer betätigbarer Druckknopf 14 zu erkennen. Wie nachfolgend noch im Detail ausgeführt werden wird, kann mit dessen Hilfe das Betätigungselement 1 in ein auf dem Tubus 2 des Zielfernrohrs verbleibendes, erstes Modulteil einerseits und ein davon abnehmbares, zweites Modulteil andererseits zerlegt werden. Die so erreichte modulartige Konstruktion des Betätigungselements erlaubt ein sehr bequemes und rasches wechselweises Austauschen unterschiedlicher aber entsprechend modular aufgebauter Stellknöpfe 12.

Die Fig. 2 zeigt einen Längsschnitt entsprechend der Rotationsachse 5 des Betätigungselementes 1 teilweise perspektivisch dargestellt. Hier sind zunächst die bereits vorstehend beschriebenen gemeinschaftlich drehbaren Teile des Stellknopfs 12 des Betätigungselements 1 zu erkennen. Dies sind vor allem die Trägerhülse 3 mit den darauf aufgesteckten zweiten, dritten, vierten Indexelementen 8, 9, 10 und dem diese festhaltenden Kappenring 11. Die Drehbewegung des Stellknopfs 12 wird schließlich auf eine Spindel 15 übertragen, die in einem Rastgehäuse 16 um die Rotationsachse 5 in einem Gewinde drehbar gelagert ist. Das Rastgehäuse 16 ist seinerseits in eine entsprechende Öffnung des Tubus 2 des Zielfernrohrs eingeschraubt, wobei die Spindel 15 unten aus dem Rastgehäuse 16 hervorsteht. Wie an sich aus dem Stand der Technik bekannt ist, drückt die Spindel 15 auf ein in dem Tubus 2 des Zielfernrohrs angeordnetes Innenrohr (nicht dargestellt), das die Zielmarke bzw. das Absehen trägt. Je nach dem Ausmaß, mit dem die Spindel 15 dabei aus dem Rastgehäuse 16 hervorsteht, ist das Innenrohr relativ zu einer Längsachse 17 des Tubus 2 mehr oder weniger schräg ausgerichtet. Somit ermöglicht ein Ein- oder Ausschrauben der Spindel 15 eine Veränderung der Lage der Zielmarke bzw. des Absehens beim Durchblick durch das Zielfernrohr. Wie ebenfalls bereits aus dem Stand der Technik bekannt, bewirkt eine solche Verstellung eine Veränderung der räumlichen Lage der Visierlinie des Zielfernrohrs relativ zu der Laufachse der Schusswaffe auf der das Zielfernrohr befestigt ist.

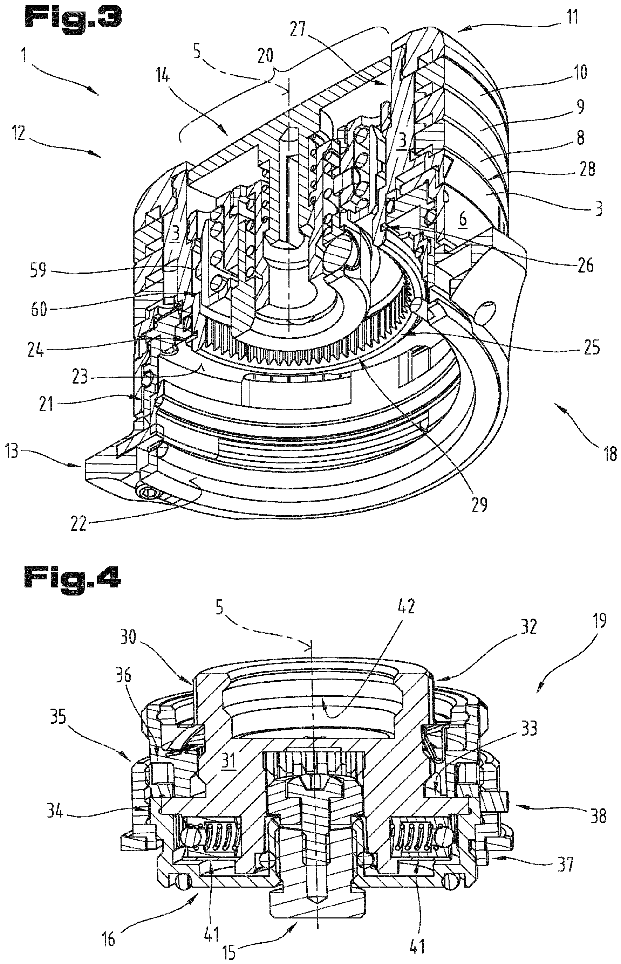

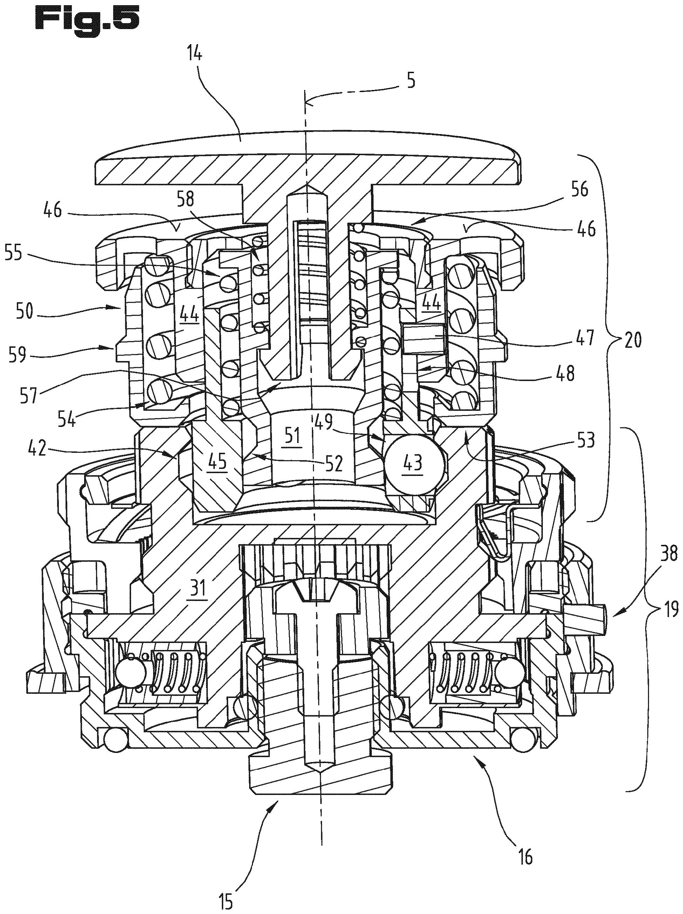

Der modulartige Aufbau des erfindungsgemäßen Betätigungselementes 1 ist besser aus den Darstellungen der Fig. 3 bis 5 zu ersehen. Dabei zeigt die Fig. 3 ein Kopfmodul 18 und die Fig. 4 ein Rumpfmodul 19 des Betätigungselementes jeweils separat dargestellt. Die Fig. 5 schließlich zeigt das Rumpfmodul 19 mit einem daran befestigten Schließmechanismus 20 des Kopfmoduls 18 (Fig. 3). Aus Gründen der besseren Übersichtlichkeit sind die weiteren Teile des Kopfmoduls 18 dabei nicht dargestellt.

Das Kopfmodul 18 weist als einen - im auf das Rumpfmodul 19 montierten Zustand - feststehenden Gehäuseteil ein Zwischengehäuse 21 auf. Das Zwischengehäuse 21 weist als Komponenten seiner Form einen im Wesentlichen rohrförmig ausgebildeten Abschnitt 22 und einen daran anschließenden nach innen weisenden Kragen in Gestalt eines kreisringscheibenförmigen Abschnitts 23 auf. Der Stellknopf 12 ist an dem Zwischengehäuse 21 drehbar gelagert befestigt, in dem die Trägerhülse 3 in dem kragenförmigen Abschnitt 23 des Zwischengehäuses 21 eingesetzt und durch einen Sicherungsring 24 in axialer Richtung (der Rotationsachse 5) fixiert ist. Dazu ist in einem unteren Hülsenabschnitt 25 der Trägerhülse 3 eine am äußeren Umfang ausgeformte Nut 26 zur Aufnahme des Sicherungsrings 24 vorgesehen.

Die Trägerhülse 3 kann grob gegliedert werden in den unteren Hülsenabschnitt 25, einen oberen Hülsenabschnitt 27 und einen zwischen dem unteren Hülsenabschnitt 25 und dem oberen Hülsenabschnitt 27 ansetzenden nach außen ragenden Kragen 28. Am Umfang des Kragens 28 der Trägerhülse 3 ist die schon einleitend erwähnte Skala 4 angebracht.

Zur Weiterleitung bzw. Übertragung einer Drehbewegung bei Betätigung des Stellknopfs 12 an die Spindel 15 des Betätigungselements 1 weist der untere Hülsenabschnitt 25 der Trägerhülse 3 eine innenliegende Verzahnung 29 auf. Im auf das Rumpfmodul 19 aufgesetzten Zustand (Fig. 2) steht diese Verzahnung 29 der Trägerhülse 3 mit einer komplementären außenliegenden Verzahnung 30 einer in dem Rumpfmodul 19 drehbar gelagerten Rastnabe 31 in Eingriff. Neben einem oberen Rohrabschnitt 32 weist die Rastnabe 31 einen nach außen wegstehenden Scheibenabschnitt 33 auf (Fig. 4). Mit Hilfe dieses Scheibenabschnitts 33 ist die Rastnabe 31 an einem oberen Rand 34 des topfförmig ausgebildeten Rastgehäuses 16 drehbar gelagert. Der obere, äußere Rand 34 des Rastgehäuses 16 wird außerdem von einem Positionierring 35 mit einem Schraubring 36 umfasst. Der Positionierring 35 ist dabei in der Art einer Überwurfmutter an dem Rand 34 des Rastgehäuses 16 gelagert. Der obere Rand 34 des Rastgehäuses 16 einerseits und der Schraubring 36 andererseits schließen den Scheibenabschnitt 33 ein und bestimmen so die axiale Lage der Rastnabe 31. Das Rastgehäuse 16, der Positionierring 35 und der Schraubring 36 bilden so ein Lager für die Rastnabe 31, die um die gemeinsame Rotationsachse 5 drehbar ist.

Angetrieben von dem Stellknopf 12 wird schließlich die Drehbewegung der Rastnabe 31 auf die Spindel 15, die ihrerseits in dem Gewinde des Rastgehäuses 16 drehbar gelagert ist, übertragen. Eine Besonderheit des beschriebenen Ausführungsbeispiels des Betätigungselements 1 ist dabei außerdem, dass die Bewegungen der Spindel 15 und der Rastnabe 31 in Richtung der Rotationsachse 5 voneinander entkoppelt sind. Dazu weist die Spindel 15 an ihrem oberen Endbereich eine Außenverzahnung auf, die mit einer entsprechenden Innenverzahnung der Rastnabe 31 in Eingriff steht (Fig. 4). Während die Spindel 15 bei einer Verdrehung auch eine Auf- oder Abbewegung vollführt, bleibt die axiale Lage der Rastnabe 31 unverändert. Dies trifft in gleicher Weise auch auf den Stellknopf 12 bzw. auf das gesamte Kopfmodul 18 zu. Dies hat den Vorteil, dass die Höhe des Betätigungselements 1, mit dem dieses über den Tubus 2 vorsteht, stets unverändert bleibt.

Der Positionierring 35 ist an zumindest einer Stelle seines Umfangs mit einer nach unten vorstehenden Nase 37 ausgebildet. Zusätzlich ist an seinem Umfang ein radial nach außen stehender Stift 38 befestigt. Im zusammengebauten Zustand von Kopfmodul 18 und Rumpfmodul 19 kommt der Stift 38 des Positionierrings 35 in einer entsprechend axial verlaufenden Ausnehmung 39 (Fig. 2) an der Innenseite des hülsenförmigen Abschnitts 22 des Zwischengehäuses 21 zu Liegen. Andererseits ist in der in dem Tubus 2 vorgesehenen Öffnung zum Einschrauben des Betätigungselementes 1 eine Ausnehmung 40 zur Aufnahme der Nase 37 des Positionierrings 35 vorgesehen. Durch die Nase 37 und den Stift 38 des Positionierrings 35 wird somit eine Verdrehsicherung zur relativen Ausrichtung des Zwischengehäuses 21 des Kopfmoduls 18 in seiner relativen Lage zu dem Positionierring 35 bzw. den Tubus 2 des Zielfernrohrs realisiert. Alternativ zu dem beschriebenen Stift 38 könnte z.B. auch eine Passfeder zur Verdrehsicherung vorgesehen sein.

Im komplett montierten Zustand, das heißt wenn sowohl das Rastgehäuse 16 in dem Tubus 2 festgeschraubt ist als auch das Kopfmodul 18 auf dem Rumpfmodul 19 aufgesetzt und befestigt ist, bilden das Rastgehäuse 16, der Positionierring 35 und das Zwischengehäuse 21 gemeinsam ein drehfest angeordnetes Gehäuse. Relativ zu diesem Gehäuse sind der Stellknopf 12, die Rastnabe 31 und die Spindel 15 des Betätigungselements 1 gemeinsam drehbar.

Wie an sich aus dem Stand der Technik bekannt, ist zwischen der Rastnabe 31 und dem Rastgehäuse 16 eine Rasteinrichtung 41 vorgesehen. Durch die Rasteinrichtung 41 wird erreicht, dass das Verdrehen der Rastnabe 31 stets inkrementiert, das heißt schrittweise, um eine vorbestimmte, kleinste Winkeleinheit erfolgt. Die Teilung bzw. Inkrementierung der Rasteinrichtung 41 entspricht dabei günstigerweise der an der Skala 4 vorgesehenen Teilung.

Wie bereits erwähnt worden ist, ist zum Befestigen des Kopfmoduls 18 auf dem Rumpfmodul 19 ein zwischen diesen beiden Modulen wirkender Schließmechanismus 20 vorgesehen. Dazu weist der obere Rohrabschnitt 32 der Rastnabe 31 an seiner Innenseite eine umlaufende Nut 42 auf. Durch den in dem Stellknopf 12 ausgebildeten Schließmechanismus 20 wird eine Sperrkugel 43 derart positioniert gehalten, dass zwischen der Rastnabe 31 und der Sperrkugel 43 bzw. dem Schließmechanismus 20 eine formschlüssige Verbindung hergestellt und aufrechterhalten wird.

Zwischen dem Schließmechanismus 20 des Kopfmoduls 18 und dem oberen Rohrabschnitt 32 der Rastnabe 31 des Rumpfmoduls 19 ist somit ein sogenanntes Gesperre ausgebildet, wobei die Sperrkugel 43 einen Riegel bzw. den Sperrer, der in die Nut 42 eingreift, bildet. Der obere Rohrabschnitt 32 der Rastnabe 31 fungiert dabei als sogenanntes Sperrstück des Gesperres. Durch Betätigung des Schließmechanismus 20 kann die Sperrkugel 43 zwischen unterschiedlichen Lagen hin und her bewegt werden. In der in Fig. 5 gezeigten Stellung der Sperrkugel 43 verhindert diese durch eine formschlüssige Verbindung mit der Nut 42 des oberen Rohrabschnitts 32 der Rastnabe 31 ein Abheben des Kopfmoduls 18 in Richtung der Rotationsachse 5.

Aus Gründen der besseren Übersichtlichkeit ist in Fig. 5 das Rumpfmodul 19 gemeinsam mit dem Schließmechanismus 20 jedoch ohne die sonstigen Teile des Kopfmoduls 18 (Fig. 3) dargestellt. Mit Hilfe dieses Schließmechanismus 20 ist es auf besonders einfache Art und Weise möglich, die Verbindung zwischen dem Kopfmodul 18 und dem Rumpfmodul 19 herzustellen bzw. zu lösen. Insbesondere ist dazu kein besonderes bzw. kein zusätzliches Werkzeug erforderlich. Zum Lösen der Verbindung reicht ein Niederdrücken des Druckknopfes 14 des Schließmechanismus 20 aus. Sowohl das Lösen als auch das Wiederherstellen der Verbindung erfolgt somit halbautomatisch.

Der Schließmechanismus 20 ist dabei als ein sogenanntes Spannwerk, das heißt als ein vorgespannte Federn aufweisendes Schaltelement, das unterschiedliche stabile Lagen einnehmen kann, ausgebildet. Die unterschiedlichen Lagen der Mechanik des Schließmechanismus 20 ermöglichen einen Wechsel der Sperrkugel 43 von einer offenen Stellung, in der die Sperrkugel 43 nicht in der Nut 42 des Rohrabschnitts 32 der Rastnabe 41 eingerastet ist, in eine geschlossene Stellung, in der die Sperrkugel 43 in der Nut 42 eingerastet ist.

Gemäß diesem Ausführungsbeispiel des Betätigungselements 1 umfasst der Schließmechanismus 20 mehrere hülsenartig koaxial ineinander verschiebbare Elemente, deren relative Lage durch zwischen ihnen wirkende vorgespannte Federn bestimmt ist. Zu diesen Elementen zählt zunächst eine Rahmenhülse 44 mit einer darin teleskopartig verschiebbaren Sperrhülse 45. Die Rahmenhülse 44 bildet gemeinsam mit der Trägerhülse 3 einen feststehenden Gehäuseteil des Schließmechanismus 20 (Fig. 3). Dazu weist die Rahmenhülse 44 einen nach außen abstehenden, oberen Scheibenabschnitt 46 mit einem Gewinde auf, mit Hilfe dessen die Rahmenhülse 44 in die Trägerhülse 3 eingeschraubt ist. Mit der Rahmenhülse 44 ist weiters ein radial ausgerichteter Stift 47 verbunden, der in ein in der Sperrhülse 45 ausgebildetes Langloch 48 eingreift bzw. mit dem Langloch 48 in Eingriff steht. Der Stift 47 bildet einen Anschlag durch den der Bewegungsbereich der möglichen Verschiebung der Sperrhülse 45 in Richtung der Rotationsachse 5 begrenzt ist.

Die Sperrhülse 45 weist schließlich an ihrem unteren Endbereich einen radial ausgerichteten Tunnel 49 für die Sperrkugel 43 auf. Der Tunnel 49 erlaubt so eine Veränderung der Lage der Sperrkugel 43 in radialer Richtung.

Zum Zwecke einer symmetrischen Kräfteverteilung bzw. um ein Verkanten der ineinander verschieblichen Hülsen zu verhindern, ist es von Vorteil, zumindest zwei oder auch mehrere Sperrkugeln 43 bzw. Stifte 47 und Langlöcher äquidistant über den Umfang verteilt vorzusehen. Gemäß diesem Ausführungsbeispiel sind jeweils drei dieser Elemente in einem WinkelAbstand von jeweils 120° über den Umfang verteilt vorgesehen.

Der Schließmechanismus 20 weist neben der Rahmenhülse 44 und der Sperrhülse 45 auch noch eine äußere Spannhülse 50 und eine innere Spannhülse 51, die ebenfalls axial (in Richtung Rotationsachse 5) verschiebbar sind, auf. In einem unteren Endbereich der inneren Spannhülse 51 ist in deren äußerem Zylindermantel eine umlaufende Nut 52 zur Aufnahme der Sperrkugeln 43 ausgebildet. Andererseits weist die äußere Spannhülse 50 in deren unteren Endbereich einen nach innen vorstehenden Scheibenabschnitt 53 auf. Je nach der Lage, die der untere Endbereich bzw. die Nut 52 der inneren Spannhülse 51 und der Scheibenabschnitt 53 der äußeren Spannhülse 50 relativ zu dem Tunnel 49 in der Sperrhülse 45 einnehmen, liegen die Sperrkugeln 43 entweder in der Nut 42 der Rastnabe 31 oder in der Nut 52 der inneren Spannhülse 51.

Um die unterschiedlichen Hülsen 44, 45, 50, 51 in ihrer Lage relativ zueinander fixiert festzuhalten, weist der Schließmechanismus 20 außerdem noch entsprechend vorgespannte Federn auf, die zwischen ihnen eine entsprechende Verstellkraft bzw. Rückhaltekraft ausüben. Es handelt sich dabei um eine erste, äußere Druckfeder 54, die zwischen der Rahmenhülse 44 und der äußeren Spannhülse 50 zur Wirkung kommt. Andererseits ist zwischen der Sperrhülse 45 und der inneren Spannhülse 51 eine zweite, innere Druckfeder 55 angeordnet bzw. eingespannt. Die äußere Druckfeder 54 und die innere Druckfeder 55 werden jeweils durch eine zylindrische Schraubenfeder gebildet. Dementsprechend ist die äußere Druckfeder 54 in einem Zwischenraum zwischen einem Innendurchmesser der äußeren Spannhülse 50 und einem Außendurchmesser der Rahmenhülse 44 angeordnet. Andererseits ist die innere Druckfeder 55 in einem zylinderförmigen Zwischenraum zwischen einem Innendurchmesser der Sperrhülse 45 und einem Außendurchmesser der inneren Spannhülse 51 angeordnet. Im eingebauten Zustand üben die Druckfedern 54, 55 Federkräfte aus, die parallel zur Rotationsachse 5 gerichtet sind. Dabei stützt sich die erste, äußere Druckfeder 54 nach Oben hin gegen den Scheibenabschnitt 46 der Rahmenhülse 44 und nach Unten hin gegen den Scheibenabschnitt 53 der äußeren Spannhülse 50. Die zweite, innere Druckfeder 55 stützt sich nach Unten hin an der Sperrhülse 45 und nach Oben hin an der inneren Spannhülse 51 ab. Die innere Spannhülse 51 und die Sperrhülse 45 werden außerdem gemeinsam mit der inneren Druckfeder 55 durch einen Schraubring 56 in der Rahmenhülse 44 festgehalten. Der Schraubring 56 ist dazu im Bereich des Scheibenabschnitts 46 der Rahmenhülse 44 in diese eingeschraubt.

Der Druckknopf 14 zur manuellen Betätigung des Schließmechanismus 20 ist mit der inneren Spannhülse 51 verbunden, wobei er dazu in der inneren Spannhülse 51 federnd gelagert ist. Alternativ könnte der Druckknopf 14 mit der inneren Spannhülse 51 auch starr verbunden sein. Gemäß diesem Ausführungsbeispiel weist der Druckknopf 14 einen mit einem Längsschlitz ausgebildeten Achsbolzen 57 auf, der mit Rastnasen an einem nach innen stehenden Vorsprung der inneren Sperrhülse 51 eingerastet ist, wobei der Achsbolzen 57 außerdem in Richtung der Rotationsachse 5 verschiebbar ist. Eine zwischen der inneren Spannhülse 51 und dem Druckknopf 14 angeordnete Druckfeder 58 hält den Druckknopf 14 in einer maximal angehobenen Lage. Dadurch wird erreicht, dass die Abwärtsbewegung der inneren Spannhülse 51 zum Betätigen des Schließmechanismus 20 erst verzögert eingeleitet wird. In der ersten Phase erfolgt nämlich zunächst nur ein Zusammendrücken der Druckfeder 58 und erst wenn der Druckknopf 14 an dem oberen Ende der inneren Spannhülse 51 mit dieser in Kontakt tritt, wird die innere Spannhülse 51 nach unten verschoben.

Die Darstellung gemäß Fig. 5 zeigt den Schließmechanismus 20 in der geschlossenen Stellung. Die äußere Druckfeder 54 zwischen der Rahmenhülse 44 und der äußeren Spannhülse 50 befindet sich dabei in ihrem maximal zusammengedrückten Zustand. Andererseits befindet sich die innere Druckfeder 55 zwischen der Sperrhülse 45 und der inneren Spannhülse 51 bzw. der Rahmenhülse 44 in einem entspannten Zustand. Die Sperrkugeln 43 sind dabei in der Nut 42 der Rastnabe 31 eingerastet und wird durch den unteren Randbereich der inneren Spannhülse 51 verhindert, dass die Sperrkugeln 43 in dem Tunnel 49 der Sperrhülse 45 ihre Lage verändern können. Die Sperrkugeln 43 und die Nut 42 der Rastnabe 31 bewirken so eine formschlüssige Verbindung zwischen dem Rumpfmodul 19 und dem Kopfmodul 18 des Betätigungselementes 1, die so lange aufrecht erhalten wird, als nicht durch Niederdrücken des Druckknopfs 14 die innere Spannhülse 51 nach Unten bewegt wird.

Zum Öffnen des Schließmechanismus 20 zwischen dem Rufmodul 19 und dem Kopfmodul 18 wird der Druckknopf 14 manuell nieder gedrückt und erfolgt nach Überwindung der Rückstellkraft der Druckfeder 58 des Druckknopfs 14 schließlich eine Abwärtsbewegung der inneren Spannhülse 51. Dadurch wird die Nut 52 soweit verschoben, dass die Sperrkugeln 43 ihre Lage in dem Tunnel 49 der Sperrhülse 45 verändern können und diese sodann von der Nut 52 der inneren Spannhülse 51 aufgenommen werden. Diese Lageveränderung der Sperrkugeln 43 wird unterstützt durch die freiwerdende Federkraft der äußeren Druckfeder 54 zwischen der äußeren Spannhülse 50 und der Rahmenhülse 44. Die Ausdehnung dieser zweiten, äußeren Druckfeder 54 hat gleichzeitig zur Folge, dass das gesamte mit der Rahmenhülse 44 verbundene Kopfmodul 18 von dem Rumpfmodul 19 abgehoben wird. Der untere Scheibenanschnitt 53 der äußeren Spannhülse 50 stützt sich dabei an dem oberen Rohrabschnitt 32 der Rastnabe 31 ab. Gemeinsam mit der Rahmenhülse 44 verschiebt sich dadurch auch die Sperrhülse 45 relativ zu der äußeren Spannhülse 50 weiter nach oben und zieht sich so in das Innere der äußeren Spannhülse 50 zurück. Der untere Scheibenabschnitt 43 der äußeren Spannhülse 50 kommt in einem oberen Bereich der Höhe bzw. des Durchmessers des Tunnels 49 der Sperrhüle 45 zu liegen. Die - relativ zur Rahmenhülse 44 - erfolgende Abwärtsbewegung der äußeren Spannhülse 50 ist dabei durch einen an der äußeren Spannhülse 50 ringförmig umlaufenden Vorsprung 59 und eine entsprechende Stufe 60 an der Innenseite der Trägerhülse 3 begrenzt.

Die Sperrkugeln 43 verbleiben während des Öffnungsvorgangs des Schließmechanismus 20 aber nur zeitweilig in der Nut 52 der inneren Spannhülse 51. Indem sich nämlich die Sperrhülse 45 weiter aus dem oberen Rohrabschnitt 32 der Rastnabe 31 herausbewegt, können die Sperrkugeln 43 in dem Tunnel 49 wieder nach Außen verschoben werden. Dies wird bewirkt durch die relative Verschiebung der inneren Spannhülse 51 gegenüber der Sperrhülse 45 aufgrund der Ausdehnung der inneren Druckfeder 55. Dadurch werden gleichzeitig die Sperrkugeln 43 durch den unteren Endbereich der inneren Spannhülse 51 nach Außen gedrückt. Eine Verengung im äußeren Endbereich der Tunnel 49 (nicht dargestellt) verhindert, dass die Sperrkugeln 43 aus den Tunneln 49 herausfallen können. Das Kopfmodul 18 kann schließlich in seiner Gesamtheit vom Rumpfmodul 19 weiter abgehoben und die beiden Module ganz voneinander getrennt werden.

Durch den Wechsel des Schließmechanismus 20 von dem geschlossenen in den offenen Zustand wird auch der Spannungszustand der äußeren Druckfeder 54 geändert. Die äußere Druckfeder 54 hat einen Wechsel von einem maximal gespannten Zustand in einen entspannten Zustand erfahren. Demgegenüber ist die innere Druckfeder 55 durch die relative Verschiebung der inneren Spannhülse 51 gegenüber der Sperrhülse 45 zunächst zusammengedrückt worden, woraufhin sie wieder in ihren ursprünglichen entspannten Zustand übergegangen ist.

Umgekehrt erfolgt - wenn das Kopfmodul 18 des Betätigungselements 1 wieder mit dem Rumpfmodul 19 verbunden werden soll - ein Wechsel der Spannungszustände der beiden Druckfedern 54, 55 jeweils in umgekehrter Reihenfolge. Beim Aufsetzen des Kopfmoduls 18 auf das Rumpfmoduls 19 kommen zunächst die Sperrkugeln 43, bzw. die Sperrelemente 43, an der Innenseite des oberen Rohrabschnittes 32 der Rastnabe 31 zu liegen. Der obere Rohrabschnitte 32 der Rastnabe 31 ist dazu an seinem inneren Rand vorzugsweise mit einer Fase ausgebildet. Nun muss das Kopfmodul zuerst unter dem Wiederstand der inneren Druckfeder 55 nach unten gedrückt werden. Dadurch verschiebt sich die Sperrhülse 45 axial in der Rahmenhülse 44 nach oben, bis die Sperrkugeln 43 in die umlaufende Nut 52 der inneren Spannhülse 51 gedrückt werden. In weiterer Folge kommt nun auch der untere Scheibenabschnitt 53 der äußeren Spannhülse 50 an dem oberen Rohrabschnitt 32 der Rastnabe 31 des Rumpfmoduls 19 zu liegen und muss nun auch der Wiederstand der äußeren Druckfeder 54 überwunden werden. Sobald das Kopfmodul 18 so weit nach unten gedrückt ist, dass die Sperrkugeln 43 in die umlaufende Nut 42 der Rastnabe 31 ausweichen können, werden diese unter der Wirkung der inneren Druckfeder 55 in diese gedrückt. Die innere Druckfeder 55 verschiebt die innere Spannhülse 51 wieder so weit nach Oben, dass ihr unterer Endbereich die Sperrkugeln 43 in der Nut 42 der Rastnabe 31 eingerastet festhält. Damit ist der geschlossene Zustand des Schließmechanismus 20 wieder hergestellt.

Bei dem Aufsetzen des Kopfmoduls 18 auf das Rumpfmodul 19 wird also zunächst die Sperrhülse 45 relativ zu der inneren Spannhülse 51 und entgegen der Wirkung der inneren Druckfeder 55 nach Oben verschoben. Die Sperrkugeln 43 vollführen dabei einen Bewegungsablauf in den Tunneln 49 zunächst in die Nut 52 der inneren Spannhülse 51 hinein, um schließlich wieder in die Nut 42 der Rastnabe 31 überzuwechseln. Der untere Endbereich der inneren Spannhülse 51 nimmt relativ zu den Tunneln 49 sodann eine Lage ein, durch die verhindert wird, dass sich die Sperrkugeln 43 wieder aus der Nut 42 der Rastnabe 31 entfernen können. Der Schließmechanismus 20 des Betätigungselements 1 befindet sich sodann wieder in seinem ursprünglichen, geschlossenen Zustand, bei dem zwischen den Sperrkugeln 43 und der Nut 42 der Rastnabe 31 eine formschlüssige Verbindung aufrecht erhalten wird.

Die axiale Beweglichkeit der Sperrhülse 45, der inneren Spannhülse 55 und der äußeren Spannhülse 54 relativ zueinander als auch relativ zu der Rahmenhülse 44 und das Zusammenspiel der Federkräfte der äußeren Druckfeder 54 und der inneren Druckfeder 55 ermöglichen das Aufsetzen des Kopfmoduls 18 nur durch Andrücken des selbigen, ohne dass dazu der Druckknopf 14 betätigt werden muss. Der so ausgebildete Schließmechanismus 20 erlaubt eine besonders komfortable Bedienung des Betätigungselements 1 durch einen Benutzer. Zum Zusammensetzen von Kopfmodul 18 und Rumpfmodul 19 ist es ausreichend, das Kopfmodul 18 an seinem Mantelumfang zu erfassen, auf das Rumpfmodul 19 aufzusetzen und nach Unten zu drücken, während der Schließmechanismus 20 selbsttätig einrastet.

Die konstruktive Ausbildung der Verbindung zwischen Kopfmodul 18 und Rumpfmodul 19 durch eine vollumfänglich verlaufende Nut 42 und durch als Kugeln ausgebildete Sperrer (Sperrkugeln 43) hat als besonderen Vorteil, dass die Verbindung zwischen der Sperrhülse 45 und der Rastnabe 31 für beliebige, relative Winkelstellungen bezüglich der Rotationsachse 5 hergestellt werden kann. Für die relative Winkelstellung zwischen dem Kopfmodul 18 und dem Rumpfmodul 19 sind bei diesem Ausführungsbeispiel nur der Stift 38 in dem Positionierring 35 und die für diesen vorgesehene axial verlaufende Ausnehmung 39 an der Innenseite des Zwischengehäuses 21 des Kopfmoduls 18 bestimmend. Beim Aufsetzen des Kopfmoduls 18 auf das Rumpfmodul 19 sind daher zuerst die Ausnehmung 39 und der Stift 38 des Positionierrings 35 zueinander auszurichten. Das heißt ein weiteres Zusammenfügen der beiden Module 18, 19 kann nur erfolgen, wenn der Stift 38 des Positionierrings 35 in der Ausnehmung 39 des Zwischengehäuses 21 aufgenommen wird.

Gemäß dem vorstehend beschriebenen Ausführungsbeispiel ist der Schließmechanismus 20 mit dem Druckknopf 14 zur Ausführung der erforderlichen Schaltbewegungen seiner Einzelteile ausgebildet. Gemäß alternativen Ausführungsformen kann der Schließmechanismus 20 anstelle des Druckknopfs 14 aber auch durch andere Bedienelemente betätigt werden. So könnten beispielsweise auch ein Drehknopf oder Drehgriff aber auch ein in axialer Richtung linear verschiebbarer Bedienring bzw. eine Schiebehülse als Bedienelement vorgesehen sein.

Ebenfalls alternativ zu dem vorstehend beschriebenen Ausführungsbeispiel können anstelle der Sperrkugeln 43 auch anders gestaltete Sperrelemente Bestandteile des Koppelmechanismus bzw. des Schließmechanismus 20 bilden. Ein solches alternatives Sperrelement könnte beispielsweise ein länglicher Stift mit abgerundeten Enden, der in dem Tunnel 49 gelagert ist, sein. Ein solcher Stift könnte auch mit einem anderen als einem kreisrunden Querschnitt gestaltet sein. Dementsprechend wäre auch der Querschnitt des Tunnels 49 zu einem solchen profilierten Stift komplementär mit einem profiliertem Querschnitt auszubilden.

Gemäß einer anderen Ausführungsform ist es in einem alternativen Ausführungsbeispiel auch möglich, abweichend von der radial verlaufenden Ausrichtung der Tunnel 49 schräg nach oben oder schräg nach unten verlaufende Tunnel 49 vorzusehen.

Alternativ zu der Anordnung der Nut 42 an dem Innenumfang des Rohrabschnitts 32 der Rastnabe 31 könnte eine Nut zur Aufnahme der Sperrkugeln 43 auch an einem äußeren Umfang der Rastnabe 31 vorgesehen sein.

Eine weitere Möglichkeit einer alternativen Ausführungsform des Betätigungselementes 1 besteht darin, den Schließmechanismus 20 anstatt in dem Kopfmodul 18 in dem Rumpfmodul 19 integriert vorzusehen.

Grundsätzlich ist die Ausbildung des Betätigungselementes 1 durch ein Kopfmodul 18 und ein Rumpfmodul 19, das durch den beschriebenen Koppelmechanismus bzw. den Schließmechanismus 20 miteinander verbunden ist, von besonderem Vorteil, weil damit entsprechend baugleich ausgebildete Stellknöpfe 12 leicht, das heißt ohne Verwendung zusätzlicher Werkzeuge, ausgetauscht werden können. So ist es bei dieser Ausführung des Betätigungselementes 1 möglich, bei dem zu verkaufenden Produkt mit dem Zielfernrohr zunächst einen einfacher ausgebildeten Stellknopf 12 (beispielsweise ohne zusätzliche Indexelemente 8, 9, 10) auszuliefern. Sollte dies gewünscht sein, so kann das Betätigungselement 1 später durch Stellknöpfe 12, die mit Indexelementen 8, 9, 10 ausgestattet sind, nachgerüstet werden.

Insbesondere ermöglicht die erfindungsgemäße Ausbildung des Betätigungselementes 1 durch ein Kopfmodul 18 und ein Rumpfmodul 19 auch ein Nachrüsten mit zusätzlichen in den Stellknöpfen 12 vorzusehenden Funktionalitäten. So könnte ein nachgerüsteter Stellknopf 12 beispielsweise mit Funktionselementen bzw. Bedienelementen eines Entfernungsmessers, eines Kompass, einer Lampe oder auch eines Laserpointers ausgestattet sein.

Vorteilhaft ist aber auch, dass im Falle einer Beschädigung des Stellknopfes 12 dieser separat abgenommen und zur Reparatur gebracht werden kann, während das Zielfernrohr bzw. die damit ausgestattete Waffe bei dem Benutzer verbleiben kann.

Die Ausführungsbeispiele zeigen mögliche Ausführungsvarianten des Betätigungselements 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Vor allem können die einzelnen in den Figuren gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

Der Ordnung halber sei abschließend darauf hingewiesen, dass zum besseren Verständnis des Aufbaus des Betätigungselements 1 dieses bzw. dessen Bestandteile teilweise unmaßstäblich und/oder vergrößert und/oder verkleinert dargestellt wurden.

**Bezugszeichenaufstellung**

| | | | |
|---|---|---|---|
| 1 | Betätigungselement | 31 | Rastnabe |
| 2 | Tubus | 32 | Rohrabschnitt |
| 3 | Trägerhülse | 33 | Scheibenabschnitt |
| 4 | Skala | 34 | Rand |
| 5 | Rotationsachse | 35 | Positionierring |
| 6 | Indexring | 36 | Schraubring |
| 7 | Nullindex | 37 | Nase |
| 8 | Zweites Indexelement | 38 | Stift |
| 9 | Drittes Indexelement | 39 | Ausnehmung |
| 10 | Viertes Indexelement | 40 | Ausnehmung |
| 11 | Kappenring | 41 | Rasteinrichtung |
| 12 | Stellknopf | 42 | Nut |
| 13 | Arretierring | 43 | Sperrkugel |
| 14 | Druckknopf | 44 | Rahmenhülse |
| 15 | Spindel | 45 | Sperrhülse |
| 16 | Rastgehäuse | 46 | Scheibenabschnitt |
| 17 | Längsachse | 47 | Stift |
| 18 | Kopfmodul | 48 | Langloch |
| 19 | Rumpfmodul | 49 | Tunnel |
| 20 | Schließmechanismus | 50 | äußere Spannhülse |
| 21 | Zwischengehäuse | 51 | innere Spannhülse |
| 22 | Abschnitt | 52 | Nut |
| 23 | Abschnitt | 53 | Scheibenabschnitt |
| 24 | Sicherungsring | 54 | äußere Druckfeder |
| 25 | unterer Hülsenabschnitt | 55 | innere Druckfeder |
| 26 | Nut | 56 | Schraubring |
| 27 | oberer Hülsenabschnitt | 57 | Achsbolzen |
| 28 | Kragen | 58 | Druckfeder |
| 29 | Verzahnung | 59 | Vorsprung |
| 30 | Verzahnung | 60 | Stufe |

## Patentansprüche

1. Betätigungselement (1) zum Einstellen der Lage einer Zielmarke eines Zielfernrohrs mit einem Kopfmodul (18) und mit einem Rumpfmodul (19) und mit einer in dem Rumpfmodul (19) um eine Rotationsachse (5) drehbar gelagerten Spindel (15), wobei das Rumpfmodul (19) ein Rastgehäuse (16) und eine in dem Rastgehäuse (16) drehbar gelagerte Rastnabe (31) umfasst, und wobei die Spindel (15) in dem Rastgehäuse (16) gelagert ist, und wobei zur Übertragung einer Drehbewegung von dem Kopfmodul (18) auf die Spindel (15) das Kopfmodul (18) mit der Spindel (15) drehgekoppelt ist, und wobei das Kopfmodul (18) und das Rumpfmodul (19) gegenüber einer Verstellung in Richtung der Rotationsachse (5) durch einen Koppelmechanismus in ihrer relativen Lage zueinander fixiert sind, wobei der Koppelmechanismus zur Trennung des Kopfmoduls (18) von dem Rumpfmodul (19) manuell betätigbar ist, so dass die Betätigung ohne Zuhilfenahme besonderer Werkzeuge erfolgen kann, **dadurch gekennzeichnet, dass** der Koppelmechanismus einen Schließmechanismus (20) mit einem Bedienelement umfasst, das Bedienelement aus einer Gruppe umfassend einen Druckknopf (14), einen Bedienring und eine Schiebehülse ausgewählt ist, wobei der Koppelmechanismus derart konfiguriert ist, dass zur Trennung des Kopfmoduls (18) von dem Rumpfmodul (19) das Bedienelement niedergedrückt oder in axialer Richtung linear verschoben werden muss und dass zur Verbindung des Kopfmoduls (18) mit dem Rumpfmodul (19) das Kopfmodul (18) auf dem Rumpfmodul (19) ohne Betätigung des Bedienelements angedrückt werden muss.

2. Betätigungselement (1) nach Anspruch 1, **dadurch gekennzeichnet, dass** zur Kennzeichnung einer vorbestimmbaren Lage der Zielmarke das Kopfmodul (18) eine Skala (4) und das Rumpfmodul (19) einen Nullindex (7) umfasst.

3. Betätigungselement (1) nach Anspruch 2, **dadurch gekennzeichnet, dass** das Kopfmodul (18) eine Trägerhülse (3) umfasst, wobei die Skala (4) an der Trägerhülse (3) angebracht ist.

4. Betätigungselement (1) nach Anspruch 3, **dadurch gekennzeichnet, dass** zumindest ein Indexelement (8, 9, 10) zur Kennzeichnung einer vorbestimmbaren Lage der Zielmarke an der Trägerhülse (3) drehfest fixiert ist.

5. Betätigungselement (1) nach Anspruch 3 oder 4, **dadurch gekennzeichnet, dass** die Trägerhülse (3) mit der Rastnabe (31) drehgekoppelt ist.

6. Betätigungselement (1) nach einem der vorhergehenden Ansprüche, **dadurch gekennzeichnet, dass** der Koppelmechanismus einen Bestandteil des Schließmechanismus (20) bildet, wobei der Schließmechanismus (20) ein Spannwerk mit vorgespannten Federn (54, 55) umfasst.

7. Betätigungselement (1) nach Anspruch 6, **dadurch gekennzeichnet, dass** das Bedienelement mit dem Spannwerk in Wirkverbindung steht, wobei durch Betätigung des Bedienelements die Verbindung zwischen dem Kopfmodul (18) und dem Rumpfmodul (19) gelöst werden kann.

8. Betätigungselement (1) nach einem der Ansprüche 6 bis 7, **dadurch gekennzeichnet, dass** das Spannwerk des Schließmechanismus (20) bezüglich der Rotationsachse (5) koaxial angeordnete und ineinander verschiebbare Hülsen umfasst.

9. Betätigungselement (1) nach einem der vorhergehenden Ansprüche, **dadurch gekennzeichnet, dass** der Schließmechanismus (20) eine Rahmenhülse (44) und eine in der Rahmenhülse (44) verschiebbare Sperrhülse (45) umfasst, wobei in einem unteren Endbereich der Sperrhülse (45) zumindest ein radial verlaufender Tunnel (49) ausgebildet ist und in dem Tunnel (49) zumindest eine Sperrkugel (43) angeordnet ist, und wobei die zumindest eine Sperrkugel (43) in radialer Richtung hin und her bewegbar ist.

10. Betätigungselement (1) nach Anspruch 9, **dadurch gekennzeichnet, dass** die Sperrhülse (45) zumindest ein axial verlaufendes Langloch (48) und die Rahmenhülse (44) zumindest einen mit dem Langloch (48) in Eingriff stehenden Stift (47) aufweist.

11. Betätigungselement (1) nach einem der Ansprüche 5 bis 10, **dadurch gekennzeichnet, dass** die Rastnabe (31) einen oberen Rohrabschnitt (32) umfasst, der an einer Innenseite eine umlaufende Nut (42) aufweist.

12. Betätigungselement (1) nach einem der Ansprüche 9 bis 11, **dadurch gekennzeichnet, dass** der Koppelmechanismus zumindest die Sperrhülse (45) mit den Sperrkugeln (43) und den oberen Rohrabschnitt (32) der Rastnabe (31) mit der Nut (42) umfasst.

13. Betätigungselement (1) nach einem der Ansprüche 9 bis 12, **dadurch gekennzeichnet, dass** in einem verbundenen Zustand von Kopfmodul (18) und Rumpfmodul (19) der untere Endbereich der Sperrhülse (45) in dem oberen Rohrabschnitt (32) der Rastnabe (31) aufgenommen ist, wobei die zumindest eine Sperrkugel (43) in der Nut (42) der Rastnabe (31) eingerastet ist.

14. Betätigungselement (1) nach einem der Ansprüche 9 bis 13, **dadurch gekennzeichnet, dass** der Schließmechanismus (20) eine äußere Spannhülse (50) und eine erste, äußere Druckfeder (54) umfasst, wobei die erste, äußere Druckfeder (54) zwischen der Rahmenhülse (44) und der äußeren Spannhülse (50) angeordnet und eingespannt gehalten ist.

15. Betätigungselement (1) nach einem der Ansprüche 9 bis 14, **dadurch gekennzeichnet, dass** der Schließmechanismus (20) eine innere Spannhülse (51) und eine zweite, innere Druckfeder (55) umfasst, wobei die zweite, innere Druckfeder (55) zwischen der Sperrhülse (45) und der inneren Spannhülse (51) angeordnet und eingespannt gehalten ist.

16. Betätigungselement (1) nach einem der Ansprüche 9 bis 15, **dadurch gekennzeichnet, dass** in dem verbundenen Zustand von Kopfmodul (18) und Rumpfmodul (19) ein unterer Endbereich der inneren Spannhülse (51) an der zumindest einen Sperrkugel (43) anliegt und diese in der umlaufenden Nut (42) der Rastnabe (31) eingerastet hält.

17. Betätigungselement (1) nach einem der Ansprüche 15 bis 16, **dadurch gekennzeichnet, dass** die innere Spannhülse (51) an einer Außenseite eine umlaufende Nut (52) aufweist, wobei in einer Zwischenstellung, beim Trennen von Kopfmodul (18) und Rumpfmodul (19), die zumindest eine Sperrkugel (43) zumindest teilweise in der umlaufenden Nut (52) der inneren Spannhülse (51) aufgenommen ist.

18. Betätigungselement (1) nach einem der Ansprüche 9 bis 17, **dadurch gekennzeichnet, dass** in einem getrennten Zustand von Kopfmodul (18) und Rumpfmodul (19) die zumindest eine Sperrkugel (43) durch eine im äußeren Endbereich des Tunnels (49) ausgebildete Verengung in ihrer radialen Lage in dem Tunnel (49) gehalten ist.

19. Betätigungselement (1) nach einem der Ansprüche 9 bis 18, **dadurch gekennzeichnet, dass** die Rahmenhülse (44) an einem oberen Endbereich einen nach außen abstehenden, oberen Scheibenabschnitt (46) aufweist, der mit der Trägerhülse (3) verbunden ist, wobei der Scheibenabschnitt (46) mit einem Gewinde in die Trägerhülse (3) eingeschraubt ist.

20. Betätigungselement (1) nach einem der Ansprüche 15 bis 19, **dadurch gekennzeichnet, dass** in dem oberen Endbereich der Rahmenhülse (44) ein Schraubring (56) befestigt ist, durch den die innere Spannhülse (51) mit der zweiten, inneren Druckfeder (55) eingespannt gehalten sind.

21. Betätigungselement (1) nach einem der Ansprüche 15 bis 20, **dadurch gekennzeichnet, dass** das Bedienelement durch einen Druckknopf (14) gebildet ist und der Druckknopf (14) unter Zwischenschaltung einer Druckfeder (58) mit der inneren Spannhülse (51) verbunden ist.

22. Betätigungselement (1) nach einem der Ansprüche 15 bis 21, **dadurch gekennzeichnet, dass** der Druckknopf (14) einen Achsbolzen (57) umfasst, der mit einem Längsschlitz und mit Rastnasen ausgebildet ist, wobei die Rastnasen an einem nach innen stehenden Vorsprung der inneren Sperrhülse (51) eingerastet sind.

23. Betätigungselement (1) nach einem der Ansprüche 21 bis 22, **dadurch gekennzeichnet, dass** der Druckknopf (14) durch die zwischen der inneren Spannhülse (51) und dem Druckknopf (14) angeordnete Druckfeder (58) in einer maximal angehobenen Lage festgehalten ist.

## Claims

1. An actuator element (1) for setting the position of a target mark of a sighting telescope having a front module (18) and a rear module (19) and having a spindle (15) mounted in the rear module (19) so as to be rotatable about an axis of rotation (5), wherein the rear module (19) comprises a lock housing (16) and a locking hub (31) mounted in the lock housing (16) so as to be rotatable, and wherein the spindle (15) is disposed in the lock housing (16), and wherein for transmitting a rotational movement from the front module (18) to the spindle (15), the front module (18) is rotationally coupled to the spindle (15), and wherein the front module (18) and the rear module (19) are fixed in their relative positions to one another by means of a coupling mechanism with respect to a displacement in the direction of the axis of rotation (5), wherein the coupling mechanism for separating the front module (18) from the rear module (19) can be manually actuated such that the actuation can be carried out without the utilization of special tools, **characterized in that** the coupling mechanism comprises a locking mechanism (20) with an operating element, the operating element is selected from a group comprising a push button (14), an operating ring and a sliding sleeve, wherein the coupling mechanism is configured such that for separating the front module (18) from the rear module (19), the operating element must be pushed down or moved linearly in the axial direction and that for connecting the front module (18) to the rear module (19), the front module (18) must be pressed on the rear module (19) without actuation of the operating element.

2. The actuator element (1) according to claim 1, **characterized in that** in order to indicate a predefinable position of the target mark, the front module (18) comprises a scale (4) and the rear module (19) comprises a zero index (7).

3. The actuator element (1) according to claim 2, **characterized in that** the front module (18) comprises a carrier sleeve (3), wherein the scale (4) is applied to the carrier sleeve (3).

4. The actuator element (1) according to claim 3, **characterized in that** at least one index element (8, 9, 10) for indicating a predefinable position of the target mark is fixed to the carrier sleeve (3) so as to be prevented from rotating relative to it.

5. The actuator element (1) according to claim 3 or 4, **characterized in that** the carrier sleeve (3) is rotationally coupled to the locking hub (31).

6. The actuator element (1) according to one of the preceding claims, **characterized in that** the coupling mechanism constitutes a part of the locking mechanism (20), wherein the locking mechanism (20) comprises a tensioning system with pretensioned springs (54, 55).

7. The actuator element (1) according to claim 6, **characterized in that** the operating element is in operative connection with the tensioning system, wherein by actuation of the operating element, the connection between the front module (18) and rear module (19) can be released.

8. The actuator element (1) according to one of claims 6 to 7, **characterized in that** the tensioning system of the locking mechanism (20) comprises sleeves which are disposed coaxially with the axis of rotation (5) and which are able to slide one inside the other.

9. The actuator element (1) according to one of the preceding claims, **characterized in that** the locking mechanism (20) comprises a frame sleeve (44) and a locking sleeve (45) which is slidable in the frame sleeve (44), wherein at least one radially extending tunnel (49) is provided in a lower end region of the locking sleeve (45), and at least one retaining ball (43) is disposed in the tunnel (49), and wherein the at least one retaining ball (43) is movable to and fro in the radial direction.

10. The actuator element (1) according to claim 9, **characterized in that** the locking sleeve (45) has at least one axially extending oblong hole (48) and the frame sleeve (44) has at least one pin (47) engaging with the oblong hole (48).

11. The actuator element (1) according to one of claims 5 to 10, **characterized in that** the locking hub (31) comprises an upper tube portion (32) having a circumferentially extending groove (42) in an internal face.

12. The actuator element (1) according to one of claims 9 to 11, **characterized in that** the coupling mechanism comprises at least the locking sleeve (45) with the retaining balls (43) and the upper tube portion (32) of the locking hub (31) with the groove (42).

13. The actuator element (1) according one of claims 9 to 12, **characterized in that** when the front module (18) and rear module (19) are in the connected state, the lower end region of the locking sleeve (45) is accommodated in the upper tube portion (32) of the locking hub (31), wherein the at least one retaining ball (43) is lodged in the groove (42) of the locking hub (31).

14. The actuator element (1) according to one of claims 9 to 13, **characterized in that** the locking mechanism (20) comprises an outer clamping sleeve (50) and a first outer compression spring (54), wherein the first outer compression spring (54) is disposed and held clamped between the frame sleeve (44) and the outer clamping sleeve (50).

15. The actuator element (1) according to one of claims 9 to 14, **characterized in that** the locking mechanism (20) comprises an inner clamping sleeve (51) and a second inner compression spring (55) and the second inner compression spring (55) is disposed and held clamped between the locking sleeve (45) and the inner clamping sleeve (51).

16. The actuator element (1) according to one of claims 9 to 15, **characterized in that** when the front module (18) and rear module (19) are in the connected state, a lower end region of the inner clamping sleeve (51) lies against the at least one retaining ball (43) and holds it lodged in the circumferentially extending groove (42) of the locking hub (31).

17. The actuator element (1) according to one of claims 15 to 16, **characterized in that** the inner clamping sleeve (51) has a circumferentially extending groove (52) in an external face, wherein in an intermediate position when separating the front module (18) and rear module (19), the at least one retaining ball (43) is at least partially accommodated in the circumferentially extending groove (52) of the inner clamping sleeve (51).

18. The actuator element (1) according to one of claims 9 to 17, **characterized in that** when the front module (18) and rear module (19) are in a separated state, the at least one retaining ball (43) is retained in its radial position in the tunnel (49) by means of a narrowed region formed in the outer end region of the tunnel (49).

19. The actuator element (1) according to one of claims 9 to 18, **characterized in that** the frame sleeve (44) has an outwardly projecting upper disk portion (46) at an upper end region which is connected to the carrier sleeve (3), wherein the disk portion (46) is screwed into the carrier sleeve (3) by means of a thread.

20. The actuator element (1) according to one of claims 15 to 19, **characterized in that** a threaded ring (56) is secured in the upper end region of the frame sleeve (44), by means of which the inner clamping sleeve (51) is held clamped with the second inner compression spring (55).

21. The actuator element (1) according to one of claims 15 to 20, **characterized in that** the operating element is formed by a push button (14) and the push button (14) is connected to the inner clamping sleeve (51) via an interconnected compression spring (58).

22. The actuator element (1) according to one of claims 15 to 21, **characterized in that** the push button (14) comprises an axle pin (57) which is provided with a longitudinal slot and locking lugs, wherein the locking lugs are latched onto an inwardly extending projection of the inner locking sleeve (51).

23. The actuator element (1) according to one of claims 21 to 22, **characterized in that** the push button (14) is held fixed in a maximum raised position by means of the compression spring (58) disposed between the inner clamping sleeve (51) and the push button (14).

## Revendications

1. Elément d'actionnement (1) destiné à régler la position d'un réticule d'une lunette de visée avec un module de tête (18) et un module de tronc (19) et avec une broche (15) supportée dans le module de tronc (19) en pouvant tourner autour d'un axe de rotation (5), dans lequel le module de tronc (19) comprend un logement d'encliquetage (16) et un moyeu d'encliquetage (31) supporté en pouvant tourner dans le logement d'encliquetage (16), et dans lequel la broche (15) est supportée dans le logement d'encliquetage (16), et dans lequel, pour la transmission d'un mouvement de rotation à partir du module de tête (18) vers la broche (15), le module de tête (18) est couplé en rotation avec la broche (15), et dans lequel le module de tête (18) et le module de tronc (19) sont fixés par un mécanisme d'accouplement dans leur position relative l'un par rapport à l'autre vis-à-vis d'un déplacement dans la direction de l'axe de rotation (5), dans lequel mécanisme d'accouplement peut être actionné manuellement pour la séparation entre le module de tête (18) et le module de tronc (19) de telle sorte que l'actionnement peut s'effectuer sans recourir à des outils particuliers, **caractérisé en ce que** le mécanisme d'accouplement comprend un mécanisme de fermeture (20) avec un élément de commande, l'élément de commande est sélectionné parmi un groupe comprenant un bouton poussoir (14), une bague de commande et un manchon coulissant, dans lequel le mécanisme d'accouplement est configuré de telle sorte que, pour la séparation entre le module de tête (18) et le module de tronc (19), l'élément de commande doit être pressé vers le bas ou être poussé linéairement dans la direction axiale, et **en ce que**, pour le raccordement du module de tête (18) avec le module de tronc (19), le module de tête (18) doit être pressé sur le module de tronc (19) sans actionnement de l'élément de commande.

2. Elément d'actionnement (1) selon la revendication 1, **caractérisé en ce que**, pour la signalisation d'une position définissable au préalable du réticule, le module de tête (18) comprend une règle graduée (4), et le module de tronc (19) comprend un index zéro (7).

3. Elément d'actionnement (1) selon la revendication 2, **caractérisé en ce que** le module de tête (18) comprend un manchon support (3), dans lequel la règle graduée (4) est mise en place sur le manchon support (3).

4. Elément d'actionnement (1) selon la revendication 3, **caractérisé en ce qu'**au moins un élément d'index (8, 9, 10) destiné à la signalisation d'une position définissable au préalable du réticule est fixé bloqué en rotation sur le manchon support (3).

5. Elément d'actionnement (1) selon la revendication 3 ou 4, **caractérisé en ce que** le manchon support (3) est couplé en rotation avec le moyeu d'encliquetage (31).

6. Elément d'actionnement (1) selon l'une des revendications précédentes, **caractérisé en ce que** le mécanisme d'accouplement forme un composant du mécanisme de fermeture (20), dans lequel le mécanisme de fermeture (20) comprend un mécanisme de mise en tension avec des ressorts (54, 55) pré-tendus.

7. Elément d'actionnement (1) selon la revendication 6, **caractérisé en ce que** l'élément de commande est en liaison opérationnelle avec le mécanisme de mise en tension, dans lequel le raccordement entre le module de tête (18) et le module de tronc (19) peut être détaché par l'actionnement de l'élément de commande.

8. Elément d'actionnement (1) selon l'une des revendications 6 à 7, **caractérisé en ce que** le mécanisme de mise en tension du mécanisme de fermeture (20) comprend des manchons disposés de façon coaxiale par rapport à l'axe de rotation (5) et pouvant coulisser les uns dans les autres.

9. Elément d'actionnement (1) selon l'une des revendications précédentes, **caractérisé en ce que** le mécanisme de fermeture (20) comprend un manchon de cadre (44) et un manchon de blocage (45) pouvant coulisser dans le manchon de cadre (44), dans lequel au moins un tunnel (49) placé radialement est constitué dans une zone d'extrémité inférieure du manchon de blocage (45), et au moins une bille de blocage (43) est disposée dans le tunnel (49), et dans lequel la bille de blocage (43) au moins au nombre de un peut être déplacée dans un mouvement de va-et-vient dans la direction radiale.

10. Elément d'actionnement (1) selon la revendication 9, **caractérisé en ce que** le manchon de blocage (45) comporte au moins un trou oblong (48) placé axialement, et le manchon de cadre (44) comporte au moins une cheville (47) en prise avec le trou oblong (48).

11. Elément d'actionnement (1) selon l'une des revendications 5 à 10, **caractérisé en ce que** le moyeu d'encliquetage (31) comprend un tronçon tubulaire (32) supérieur qui comporte une rainure (42) périphérique sur un côté intérieur.

12. Elément d'actionnement (1) selon l'une des revendications 9 à 11, **caractérisé en ce que** le mécanisme d'accouplement comprend au moins le manchon de blocage (45) avec les billes de blocage (43) et le tronçon tubulaire (32) supérieur du moyeu d'encliquetage (31) avec la rainure (42).

13. Elément d'actionnement (1) selon l'une des revendications 9 à 12, **caractérisé en ce que**, dans un état raccordé du module de tête (18) et du module de tronc (19), la zone d'extrémité inférieure du manchon de blocage (45) est logée dans le tronçon tubulaire (32) supérieur du moyeu d'encliquetage (31), dans lequel la bille de blocage (43) au moins au nombre de un est encliquetée dans la rainure (42) du moyeu d'encliquetage (31).

14. Elément d'actionnement (1) selon l'une des revendications 9 à 13, **caractérisé en ce que** le mécanisme de fermeture (20) comprend un manchon de serrage (50) extérieur et un premier ressort de pression (54) extérieur, dans lequel le premier ressort de pression (54) extérieur est disposé et maintenu serré entre le manchon de cadre (44) et le manchon de serrage (50) extérieur.

15. Elément d'actionnement (1) selon l'une des revendications 9 à 14, **caractérisé en ce que** le mécanisme de fermeture (20) comprend un manchon de serrage (51) intérieur et un deuxième ressort de pression (55) intérieur, dans lequel le deuxième ressort de pression (55) intérieur est disposé et maintenu serré entre le manchon de blocage (45) et le manchon de serrage (51) intérieur.

16. Elément d'actionnement (1) selon l'une des revendications 9 à 15, **caractérisé en ce que**, dans l'état raccordé du module de tête (18) et du module de tronc (19), une zone d'extrémité inférieure du manchon de serrage (51) intérieur est plaquée contre la bille de blocage (43) au moins au nombre de un et maintient celle-ci encliquetée dans la rainure (42) périphérique du moyeu d'encliquetage (31).

17. Elément d'actionnement (1) selon l'une des revendications 15 à 16, **caractérisé en ce que** le manchon de serrage (51) intérieur comporte sur son côté extérieur une rainure (52) périphérique, dans lequel, dans une position intermédiaire, lors de la séparation entre le module de tête (18) et le module de tronc (19), la bille de blocage (43) au moins au nombre de un est logée au moins partiellement dans la rainure (52) périphérique du manchon de serrage (51) intérieur.

18. Elément d'actionnement (1) selon l'une des revendications 9 à 17, **caractérisé en ce que**, dans un état séparé entre le module de tête (18) et le module de tronc (19), la bille de blocage (43) au moins au nombre de un est maintenue dans sa position radiale dans le tunnel (49) par un rétrécissement constitué dans la zone d'extrémité extérieure du tunnel (49).

19. Elément d'actionnement (1) selon l'une des revendications 9 à 18, **caractérisé en ce que**, sur une zone d'extrémité supérieure, le manchon de cadre (44) comporte un tronçon de disque (46) supérieur dépassant vers l'extérieur qui est raccordé au manchon support (3), dans lequel le tronçon de disque (46) est vissé dans le manchon support (3) avec un filet.

20. Elément d'actionnement (1) selon l'une des revendications 15 à 19, **caractérisé en ce que**, dans la zone d'extrémité supérieure du manchon de cadre (44), il est fixé une bague filetée (56) par laquelle le manchon de serrage (51) intérieur est maintenu serré avec le deuxième ressort de pression (55) intérieur.

21. Elément d'actionnement (1) selon l'une des revendications 15 à 20, **caractérisé en ce que** l'élément de commande est formé par un bouton poussoir (14), et le bouton poussoir (14) est raccordé au manchon de serrage (51) intérieur avec interposition d'un ressort de pression (58).

22. Elément d'actionnement (1) selon l'une des revendications 15 à 21, **caractérisé en ce que** le bouton poussoir (14) comprend un boulon axial (57) qui est constitué avec une fente longitudinale et avec des becs d'encliquetage, dans lequel les becs d'encliquetage sont encliquetés sur une saillie, située vers l'intérieur, du manchon de serrage (51) intérieur.

23. Elément d'actionnement (1) selon l'une des revendications 21 à 22, **caractérisé en ce que** le bouton poussoir (14) est retenu fixement dans une position relevée au maximum par le ressort de pression (58) disposé entre le manchon de serrage (51) intérieur et le bouton poussoir (14).
